# EUROPEAN PATENT APPLICATION

(11) **EP 4 808 193 A1**
(43) Date of publication of application: **16.09.2026**
(21) Application number: 24902114.8
(22) Date of filing: 27.07.2024
(51) Int. Cl.: H04W 24/08

(54) **DATA ACQUISITION METHOD, DEVICE AND SYSTEM, AND STORAGE MEDIUM**

(30) Priority: 15.12.2023 CN 202311733276
(71) Applicant: Huawei Technologies Co., Ltd., Shenzhen, Guangdong 518129 (CN)
(72) Inventor: XIONG, Ruixiang, Shenzhen, Guangdong 518129 (CN); LI, Yexing, Shenzhen, Guangdong 518129 (CN); ZHANG, Xiaowei, Shenzhen, Guangdong 518129 (CN); YANG, Xiaoyun, Shenzhen, Guangdong 518129 (CN)
(74) Representative: Huawei European IPR
(86) International application number: PCT/CN2024/108015
(87) International publication number: WO 2025/123688

(57) **Abstract**

A data obtaining method, apparatus, and system, and a storage medium are provided. A network management service consumer entity may send, to a network management service provider entity, a calculation formula for calculating communication efficiency data of a network element set. The network management service provider entity may obtain the communication efficiency data of the network element set according to the calculation formula provided by the network management service consumer entity, and send the communication efficiency data to the network management service consumer entity. Therefore, communication efficiency data can be flexibly obtained based on a requirement of the network management service consumer entity.

## Description

This application claims priority to Chinese Patent Application No. 202311733276.6, filed with the China National Intellectual Property Administration on December 15, 2023 and entitled "DATA OBTAINING METHOD, APPARATUS, AND SYSTEM, AND STORAGE MEDIUM", which is incorporated herein by reference in its entirety.

### TECHNICAL FIELD

This application relates to the field of communication technologies, and in particular, to a data obtaining method, apparatus, and system, and a storage medium.

### BACKGROUND

Communication efficiency data is an important measurement indicator for evaluating a network energy saving method. Communication efficiency data of a network element set before and after energy saving is compared. In this way, an improvement in communication efficiency indicates that the energy saving method has a gain effect.

Generally, a network management service provider entity stores a calculation formula that is of communication efficiency data and that is defined in a standard, calculates the communication efficiency data according to the stored calculation formula, and returns the communication efficiency data to a network management service consumer entity.

However, communication efficiency data allowed to be measured in a current standard is single, and consequently communication efficiency data cannot be flexibly obtained.

### SUMMARY

This application provides a data obtaining method, apparatus, and system, and a storage medium, to flexibly obtain communication efficiency data.

According to a first aspect, a data obtaining method is provided. The method may be performed by a network management service consumer entity, may be performed by a chip or a circuit configured in a network management service consumer entity, or may be performed by a logical module or software that can implement all or some functions of a network management service consumer entity. This is not limited in this application.

The method includes: sending a request message, where the request message includes a first calculation formula for calculating communication efficiency data of a network element set, the first calculation formula includes a first calculation factor and a second calculation factor, the first calculation factor indicates service measurement data associated with the network element set, the second calculation factor indicates cost data associated with the network element set, and the network element set includes at least one communication network element; and receiving the communication efficiency data that is of the network element set and that is obtained according to the first calculation formula.

According to this method, the network management service consumer entity may send, to a network management service provider entity, the calculation formula for calculating the communication efficiency data of the network element set. The network management service provider entity may obtain the communication efficiency data of the network element set according to the calculation formula provided by the network management service consumer entity, and send the communication efficiency data to the network management service consumer entity. Therefore, communication efficiency data can be flexibly obtained based on a requirement of the network management service consumer entity.

In a possible implementation, the communication efficiency data is related to a ratio between the first calculation factor and the second calculation factor.

In another possible implementation, when the cost data is energy consumption data, the communication efficiency data is energy efficiency data.

In still another possible implementation, when the cost data is carbon emission data, the communication efficiency data is carbon efficiency data.

In still another possible implementation, the carbon emission data is real-time data collected from the network element set, the carbon emission data is predicted data obtained based on historical carbon emission data associated with the network element set, or the carbon emission data is obtained based on energy consumption data.

In this implementation, the carbon emission data may be the real-time data collected from the network element set, or may be the predicted data obtained based on the historical carbon emission data associated with the network element set, or may be obtained based on the energy consumption data. When the network management service provider entity cannot obtain the carbon emission data in time (for example, the network element set has a weak data processing capability or is performing another task), a prediction function of the network management service provider entity may be used to obtain the predicted data based on the historical carbon emission data associated with the network element set. In this way, timeliness and accuracy of feedback of the carbon emission data can be ensured.

In still another possible implementation, the energy consumption data is real-time data collected from the network element set, or the energy consumption data is predicted data obtained based on historical energy consumption data associated with the network element set.

In this implementation, the energy consumption data may be the real-time data collected from the network element set, or may be the predicted data obtained based on the historical energy consumption data associated with the network element set. When the network management service provider entity cannot obtain the energy consumption data in time (for example, the network element set has the weak data processing capability or is performing another task), the prediction function of the network management service provider entity may be used to obtain the predicted data based on the historical energy consumption data associated with the network element set. In this way, timeliness and accuracy of feedback of the energy consumption data can be ensured.

In still another possible implementation, the service measurement data is real-time data collected from the network element set, or the service measurement data is predicted data obtained based on historical service measurement data associated with the network element set.

In this implementation, the service measurement data may be the real-time data collected from the network element set, or may be the predicted data obtained based on the historical service measurement data associated with the network element set. When the network management service provider entity cannot obtain the service measurement data in time (for example, the network element set has the weak data processing capability or is performing another task), the prediction function of the network management service provider entity may be used to obtain the predicted data based on the historical service measurement data associated with the network element set. In this way, timeliness and accuracy of feedback of the service measurement data can be ensured.

In still another possible implementation, the request message further includes an identity of the at least one communication network element in the network element set.

In still another possible implementation, the request message further includes an identity corresponding to the first calculation formula.

In this implementation, the identity uniquely identifies the communication efficiency data, and the identity is in one-to-one correspondence with the first calculation formula.

In still another possible implementation, the method further includes: obtaining the identity and/or the first calculation formula based on an input of a user.

In this implementation, the user may customize an identity and a calculation formula of communication efficiency data, so that communication efficiency data can be flexibly obtained.

In still another possible implementation, the method further includes: presenting the first calculation factor and/or the second calculation factor for the user to select.

In this implementation, the user may flexibly select a first calculation factor and a second calculation factor, so that a calculation formula of communication efficiency data can be flexibly constructed.

In still another possible implementation, the method further includes: receiving the first calculation factor and/or the second calculation factor from an operation, administration, and maintenance (operation, administration, and maintenance, OAM) or a third-party server; or obtaining the first calculation factor and/or the second calculation factor from a profile.

In still another possible implementation, the identity further corresponds to a second calculation formula for calculating the communication efficiency data of the network element set, and the request message is used to request to replace the second calculation formula with the first calculation formula.

In this implementation, the network management service consumer entity may further request to update the calculation formula of the communication efficiency data, to obtain communication efficiency data needed by the network management service consumer entity.

According to a second aspect, a data obtaining method is provided. The method may be performed by a network management service provider entity, may be performed by a chip or a circuit configured in a network management service provider entity, or may be performed by a logical module or software that can implement all or some functions of a network management service provider entity. This is not limited in this application.

The method includes: receiving a request message, where the request message includes a first calculation formula for calculating communication efficiency data of a network element set, the first calculation formula includes a first calculation factor and a second calculation factor, the first calculation factor indicates service measurement data associated with the network element set, the second calculation factor indicates cost data associated with the network element set, and the network element set includes at least one communication network element; and sending the communication efficiency data that is of the network element set and that is obtained according to the first calculation formula.

According to this method, the network management service provider entity may receive the calculation formula that is sent by a network management service consumer entity and that is for calculating the communication efficiency data of the network element set. The network management service provider entity may obtain the communication efficiency data of the network element set according to the calculation formula provided by the network management service consumer entity, and send the communication efficiency data to the network management service consumer entity. Therefore, communication efficiency data can be flexibly obtained based on a requirement of the network management service consumer entity.

In a possible implementation, the communication efficiency data is related to a ratio between the first calculation factor and the second calculation factor.

In another possible implementation, when the cost data is energy consumption data, the communication efficiency data is energy efficiency data.

In still another possible implementation, when the cost data is carbon emission data, the communication efficiency data is carbon efficiency data.

In still another possible implementation, the carbon emission data is real-time data collected from the network element set, the carbon emission data is predicted data obtained based on historical carbon emission data associated with the network element set, or the carbon emission data is obtained based on energy consumption data.

In this implementation, the carbon emission data may be the real-time data collected from the network element set, or may be the predicted data obtained based on the historical carbon emission data associated with the network element set, or may be obtained based on the energy consumption data. When the network management service provider entity cannot obtain the carbon emission data in time (for example, the network element set has a weak data processing capability or is performing another task), a prediction function of the network management service provider entity may be used to obtain the predicted data based on the historical carbon emission data associated with the network element set. In this way, timeliness and accuracy of feedback of the carbon emission data can be ensured.

In still another possible implementation, the energy consumption data is real-time data collected from the network element set, or the energy consumption data is predicted data obtained based on historical energy consumption data associated with the network element set.

In this implementation, the energy consumption data may be the real-time data collected from the network element set, or may be the predicted data obtained based on the historical energy consumption data associated with the network element set. When the network management service provider entity cannot obtain the energy consumption data in time (for example, the network element set has the weak data processing capability or is performing another task), the prediction function of the network management service provider entity may be used to obtain the predicted data based on the historical energy consumption data associated with the network element set. In this way, timeliness and accuracy of feedback of the energy consumption data can be ensured.

In still another possible implementation, the service measurement data is real-time data collected from the network element set, or the service measurement data is predicted data obtained based on historical service measurement data associated with the network element set.

In this implementation, the service measurement data may be the real-time data collected from the network element set, or may be the predicted data obtained based on the historical service measurement data associated with the network element set. When the network management service provider entity cannot obtain the service measurement data in time (for example, the network element set has the weak data processing capability or is performing another task), the prediction function of the network management service provider entity may be used to obtain the predicted data based on the historical service measurement data associated with the network element set. In this way, timeliness and accuracy of feedback of the service measurement data can be ensured.

In still another possible implementation, the request message further includes an identity of the at least one communication network element in the network element set.

In still another possible implementation, the identity further corresponds to a second calculation formula for calculating the communication efficiency data of the network element set, and the request message is used to request to replace the second calculation formula with the first calculation formula.

In this implementation, the network management service consumer entity may further request to update the calculation formula of the communication efficiency data, to obtain communication efficiency data needed by the network management service consumer entity.

In a possible implementation, the method further includes: parsing the first calculation formula; and checking the first calculation formula.

In this implementation, because the calculation formula of the communication efficiency data in this application is customized by a user, after receiving the request message, the network management service provider entity needs to parse and check the calculation formula of the communication efficiency data.

The customized calculation formula of the communication efficiency data includes a number, a first calculation factor, a second calculation factor, and an operator. The network management service provider entity may pre-store a plurality of numbers, a plurality of first calculation factors, a plurality of second calculation factors, and a plurality of operators. When the request message is received, the network management service provider entity compares the pre-stored numbers, calculation factors, and operators with those in the calculation formula of the communication efficiency data in the request message, to parse out the calculation formula of the communication efficiency data.

The network management service provider entity checks whether the calculation formula of the communication efficiency data is valid. If an identity of the communication efficiency data and the calculation formula of the communication efficiency data meet a requirement, the calculation formula is valid; or if an identity of the communication efficiency data and the calculation formula of the communication efficiency data do not meet a requirement, the calculation formula is invalid.

In still another possible implementation, the first calculation formula further includes an operator, where the operator is for calculating the first calculation factor and the second calculation factor; and checking the first calculation formula includes at least one of the following operations: checking whether the first calculation factor and the second calculation factor comply with a standard definition; or checking whether the operator complies with a standard definition.

In this implementation, whether the first calculation factor and the second calculation factor in the first calculation formula comply with the standard definition is checked. For example, whether the first calculation factor and the second calculation factor can be found in an existing standard is checked. If the first calculation factor and the second calculation factor cannot be found, the first calculation formula is considered as invalid; or if the first calculation factor and the second calculation factor can be found, the first calculation formula is considered as valid.

Whether the operator in the first calculation formula complies with the standard definition is checked. For example, whether the operator in the first calculation formula input by the user can be normally operated is checked. For example, if a special character like @, #, or % appears, operation cannot be normally performed according to the first calculation formula. In this case, the first calculation formula is considered as invalid. If the foregoing special character does not appear, the first calculation formula is considered as valid.

In still another possible implementation, the request message further includes an identity corresponding to the first calculation formula.

In this implementation, the identity uniquely identifies the communication efficiency data, and the identity is in one-to-one correspondence with the first calculation formula.

In still another possible implementation, the method further includes: checking whether the identity is the same as an identity defined in a standard.

In this implementation, because the identity of the communication efficiency data in this application is customized by the user, whether the identity of the communication efficiency data is valid needs to be checked. If the identity of the communication efficiency data meets a requirement, the identity of the communication efficiency data is valid; or if the identity of the communication efficiency data does not meet a requirement, the identity of the communication efficiency data is invalid. The network management service provider entity may first check an identity that is of communication efficiency data and that is defined in the existing standard for the identity. If the identity cannot be found, a communication efficiency data list customized by the user is then checked for the identity. If the identity cannot be found in both manners, the checking is considered as invalid.

In still another possible implementation, the method further includes: storing the identity and the first calculation formula in a corresponding manner.

In this implementation, the network management service provider entity may store, locally or in a third-party server, the identity and the first calculation formula corresponding to the identity. If the network management service consumer entity requests to obtain the communication efficiency data again, the network management service consumer entity may choose to include the identity in the request message, but does not include the first calculation formula. The network management service provider entity may find, locally or in the third-party server based on the identity in the request message, the first calculation formula corresponding to the identity. Therefore, overheads of the request message can be reduced.

In still another possible implementation, the identity further corresponds to a second calculation formula for calculating the energy efficiency data of the communication network, and the request message is used to request to replace the second calculation formula with the first calculation formula.

In this implementation, the network management service provider entity may store the identity and the first calculation formula locally or in the third-party server. If the network management service consumer entity requests to obtain the communication efficiency data again, and the calculation formula of the communication efficiency data is updated, the network management service consumer entity may choose to include, in the request message, the identity and the second calculation formula obtained through the update. After receiving the request message, the network management service provider entity searches for, based on the identity of the communication efficiency data in the request message, the first calculation formula that is stored locally in the network management service provider entity or in the third-party server and that corresponds to the identity, and detects that the first calculation formula that is stored locally in the network management service provider entity or in the third-party server and that corresponds to the identity is partially or completely different from the second calculation formula carried in the request message. In this case, the network management service provider entity updates, according to the second calculation formula carried in the request message, the first calculation formula that is stored locally in the network management service provider entity or in the third-party server and that corresponds to the identity.

According to a third aspect, a data obtaining apparatus is provided, and may implement the method of the network management service consumer entity in any one of the first aspect or the implementations of the first aspect. For example, the network management service consumer entity may be a chip or a circuit. The foregoing method may be implemented by software, hardware, or hardware executing corresponding software.

In a possible implementation, the apparatus includes a transceiver unit, and may further include a processing unit. The transceiver unit is configured to send a request message, where the request message includes a first calculation formula for calculating communication efficiency data of a network element set, the first calculation formula includes a first calculation factor and a second calculation factor, the first calculation factor indicates service measurement data associated with the network element set, the second calculation factor indicates cost data associated with the network element set, and the network element set includes at least one communication network element. The transceiver unit is further configured to receive the communication efficiency data that is of the network element set and that is obtained according to the first calculation formula.

Optionally, the communication efficiency data is related to a ratio between the first calculation factor and the second calculation factor.

Optionally, when the cost data is energy consumption data, the communication efficiency data is energy efficiency data.

Optionally, when the cost data is carbon emission data, the communication efficiency data is carbon efficiency data.

Optionally, the carbon emission data is real-time data collected from the network element set, the carbon emission data is predicted data obtained based on historical carbon emission data associated with the network element set, or the carbon emission data is obtained based on energy consumption data.

Optionally, the energy consumption data is real-time data collected from the network element set, or the energy consumption data is predicted data obtained based on historical energy consumption data associated with the network element set.

Optionally, the service measurement data is real-time data collected from the network element set, or the service measurement data is predicted data obtained based on historical service measurement data associated with the network element set.

Optionally, the request message further includes an identity of the at least one communication network element in the network element set.

Optionally, the request message further includes an identity corresponding to the first calculation formula.

Optionally, the processing unit is configured to obtain the identity and/or the first calculation formula based on an input of a user.

Optionally, the processing unit is further configured to present the first calculation factor and/or the second calculation factor for the user to select.

Optionally, the transceiver unit is further configured to receive the first calculation factor and/or the second calculation factor from an OAM or a third-party server; or the processing unit is further configured to obtain the first calculation factor and/or the second calculation factor from a profile.

Optionally, the identity further corresponds to a second calculation formula for calculating the communication efficiency data of the network element set, and the request message is used to request to replace the second calculation formula with the first calculation formula.

According to a fourth aspect, a data obtaining apparatus is provided, and may implement the method of the network management service provider entity in any one of the second aspect or the implementations of the second aspect. For example, the network management service provider entity may be a chip or a circuit. The foregoing method may be implemented by software, hardware, or hardware executing corresponding software.

In a possible implementation, the apparatus includes a transceiver unit, and may further include a processing unit. The transceiver unit is configured to receive a request message, where the request message includes a first calculation formula for calculating communication efficiency data of a network element set, the first calculation formula includes a first calculation factor and a second calculation factor, the first calculation factor indicates service measurement data associated with the network element set, the second calculation factor indicates cost data associated with the network element set, and the network element set includes at least one communication network element. The transceiver unit is further configured to send, in response to the request message, the communication efficiency data that is of the network element set and that is obtained according to the first calculation formula.

Optionally, the communication efficiency data is related to a ratio between the first calculation factor and the second calculation factor.

Optionally, when the cost data is energy consumption data, the communication efficiency data is energy efficiency data.

Optionally, when the cost data is carbon emission data, the communication efficiency data is carbon efficiency data.

Optionally, the carbon emission data is real-time data collected from the network element set, the carbon emission data is predicted data obtained based on historical carbon emission data associated with the network element set, or the carbon emission data is obtained based on energy consumption data.

Optionally, the energy consumption data is real-time data collected from the network element set, or the energy consumption data is predicted data obtained based on historical energy consumption data associated with the network element set.

Optionally, the service measurement data is real-time data collected from the network element set, or the service measurement data is predicted data obtained based on historical service measurement data associated with the network element set.

Optionally, the request message further includes an identity of the at least one communication network element in the network element set.

Optionally, the processing unit is configured to parse the first calculation formula, and the processing unit is further configured to check the first calculation formula.

Optionally, the first calculation formula further includes an operator, where the operator is for calculating the first calculation factor and the second calculation factor; and the processing unit is further configured to: check whether the first calculation factor and the second calculation factor comply with a standard definition; or check whether the operator complies with a standard definition.

Optionally, the request message further includes an identity corresponding to the first calculation formula.

Optionally, the processing unit is further configured to check whether the identity is the same as an identity defined in a standard.

Optionally, the identity further corresponds to a second calculation formula for calculating the communication efficiency data of the network element set, and the request message is used to request to replace the second calculation formula with the first calculation formula.

With reference to the third aspect and the fourth aspect or either of the third aspect and the fourth aspect, in still another possible implementation, the data obtaining apparatus in the third aspect and the fourth aspect or either of the third aspect and the fourth aspect includes a processor coupled to a memory. The processor is configured to support the apparatus in performing a corresponding function in the foregoing method. The memory is configured to be coupled to the processor, and stores a program (instructions) and/or data necessary for the apparatus. Optionally, the data obtaining apparatus may further include a communication interface, configured to support communication between the apparatus and another network element. Optionally, the memory may be located inside the data obtaining apparatus, or may be located outside the data obtaining apparatus.

With reference to the third aspect and the fourth aspect or either of the third aspect and the fourth aspect, in still another possible implementation, the data obtaining apparatus in the third aspect and the fourth aspect or either of the third aspect and the fourth aspect includes a processor and a transceiver apparatus. The processor is coupled to the transceiver apparatus. The processor is configured to execute a computer program or instructions, to control the transceiver apparatus to receive and send information. When the processor executes the computer program or the instructions, the processor is further configured to implement the foregoing method through a logic circuit or by executing code instructions. The transceiver apparatus may be a transceiver, a transceiver circuit, or an input/output interface, and is configured to: receive a signal from an apparatus other than the data obtaining apparatus and transmit the signal to the processor, or send a signal from the processor to an apparatus other than the data obtaining apparatus. When the data obtaining apparatus is a chip, the transceiver apparatus is a transceiver circuit or an input/output interface.

When the data obtaining apparatus in the third aspect and the fourth aspect or either of the third aspect and the fourth aspect is a chip or a chip module, a sending unit may be an output unit, for example, an output circuit or a communication interface; and a receiving unit may be an input unit, for example, an input circuit or a communication interface. When the data obtaining apparatus is a terminal or an access network device, the sending unit may be a transmitter or a transmitter machine, and the receiving unit may be a receiver or a receiver machine.

According to a fifth aspect, a data obtaining system is provided, including the data obtaining apparatus according to any one of the third aspect or the implementations of the third aspect and the data obtaining apparatus according to any one of the fourth aspect or the implementations of the fourth aspect.

According to a sixth aspect, a computer-readable storage medium is provided. The computer-readable storage medium stores a computer program or instructions. When a computer executes the computer program or the instructions, the method according to any one of the first aspect and the second aspect, or the possible implementations of the first aspect and the second aspect is implemented.

According to a seventh aspect, a computer program product including instructions is provided. When the instructions are run on a data obtaining apparatus, the data obtaining apparatus is enabled to perform the method according to any one of the first aspect and the second aspect, or the possible implementations of the first aspect and the second aspect.

### BRIEF DESCRIPTION OF DRAWINGS

FIG. 1 is a schematic flowchart of a data obtaining method according to an embodiment of this application;
FIG. 2 is a diagram of an architecture of a data obtaining system according to an embodiment of this application;
FIG. 3 is a schematic flowchart of a data obtaining method according to an embodiment of this application;
FIG. 4 is a schematic flowchart of another data obtaining method according to an embodiment of this application;
FIG. 5 is a diagram of a structure of a data obtaining apparatus according to an embodiment of this application; and
FIG. 6 is a diagram of a structure of another data obtaining apparatus according to an embodiment of this application.

### DESCRIPTION OF EMBODIMENTS

The following describes embodiments of this application with reference to accompanying drawings in embodiments of this application.

In a wireless energy saving scenario, communication efficiency data is an important measurement indicator for evaluating a network energy saving method. Communication efficiency data of a network element set before and after energy saving is compared. If communication efficiency is improved, it indicates that the energy saving method has a gain effect.

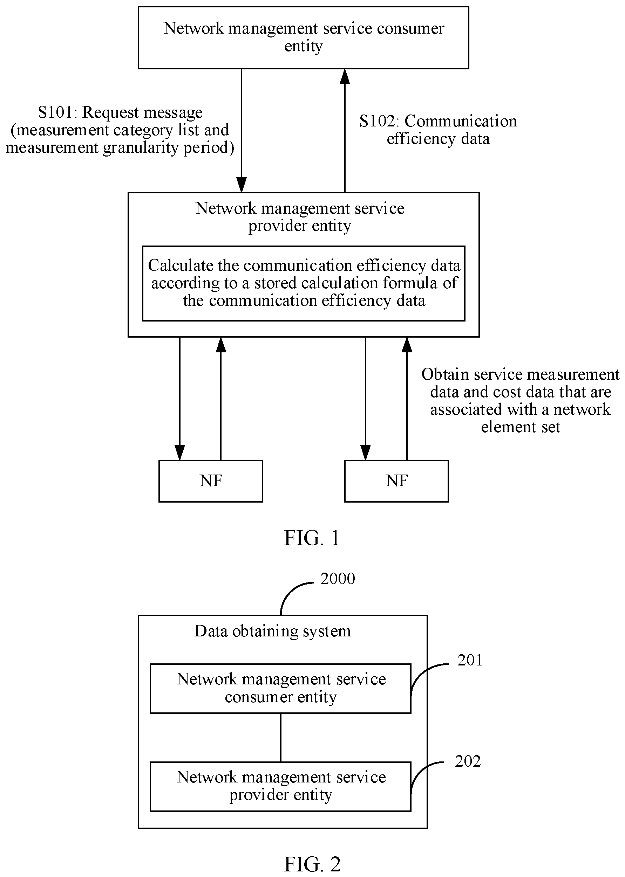

FIG. 1 is a schematic flowchart of a data obtaining method according to an embodiment of this application. For example, the method may include the following steps.

S101: A network management service consumer entity sends a request message to a network management service provider entity. Correspondingly, the network management service provider entity receives the request message.

The request message is used to request to obtain communication efficiency data.

The request message includes a measurement category list (*measurementCategoryList*) and a measurement granularity period (granularityPeriod).

The measurement category list indicates a name/an identity (identity, ID) of a type (a measurement type or measurement types) or a key performance indicator (key performance indicator, KPI) of data that needs to be measured in a current measurement task. The KPI includes communication efficiency, and the communication efficiency is a subcategory of the KPI. Currently, a KPI-category measurement task can measure only what is defined in a standard, that is, communication efficiency defined in a standard.

The communication efficiency data is related to a ratio between service measurement data and cost data, the service measurement data is service measurement data associated with a network element set, and the cost data is cost data associated with the network element set.

The measurement granularity period indicates a time interval between two times of generating measurement data. For example, maximum measurement frequency of KPI-category measurement is once every 5 minutes.

S102: The network management service provider entity sends the communication efficiency data to the network management service consumer entity. Correspondingly, the network management service consumer entity receives the communication efficiency data.

In this embodiment, the network management service provider entity stores a calculation formula that is currently defined in a standard and that is for calculating the communication efficiency data of the network element set. When the network management service provider entity receives the request message sent by the network management service consumer entity, the network management service provider entity may find a corresponding calculation formula based on a name/an identity of the communication efficiency, obtain the service measurement data and the cost data from the network element set, calculate the communication efficiency data according to the found calculation formula and the obtained service measurement data and cost data, and finally send the communication efficiency data to the network management service consumer entity.

However, currently, only communication efficiency data defined in a standard is allowed to be obtained, and the communication efficiency data allowed to be obtained is single. In an existing standard, a calculation formula of communication efficiency data in a scenario of a radio access network (radio access network, RAN), network slicing (subdivided into service types such as enhanced mobile broadband (enhanced mobile broadband, eMBB), ultra-reliable low-latency communication (ultra-reliable low-latency communication, URLLC), and a metamorphic internet of things (metamorphic internet of things, MIoT)), and a 5^{th} generation core (5^{th} generation core, 5GC) network is defined. However, in a further standard, it is proposed that communication efficiency data should be used as a service standard to provide a service for a user, and the user may select a new requirement for the communication efficiency data based on a requirement of the user. However, in a current communication efficiency measurement task, only the communication efficiency data defined in the existing standard can be measured, and communication efficiency data cannot be flexibly obtained.

For the foregoing problem, this application provides a data obtaining solution. The network management service consumer entity may send a calculation formula of communication efficiency data to the network management service provider entity, and the network management service provider entity may obtain communication efficiency data of a network element set according to the calculation formula that is of the communication efficiency data and that is provided by the network management service consumer entity, and send the communication efficiency data to the network management service consumer entity. Therefore, communication efficiency data can be flexibly obtained based on a requirement of the network management service consumer entity, and is not limited to the communication efficiency data defined in a standard being obtained.

FIG. 2 is a diagram of an architecture of a data obtaining system according to an embodiment of this application. The system 2000 includes a network management service consumer entity 201 and a network management service provider entity 202 that may interact with each other. For example, the network management service consumer entity 201 may be located in a data obtaining system (network management system, NMS), and the network management service provider entity 202 may be located in a network element management system (element management system, EMS).

The network management service consumer entity 201 sends a request message to the network management service provider entity 202, where the request message includes a first calculation formula for calculating communication efficiency data of a network element set, the first calculation formula includes a first calculation factor and a second calculation factor, the first calculation factor indicates service measurement data associated with the network element set, the second calculation factor indicates cost data associated with the network element set, and the network element set includes at least one communication network element. The network management service provider entity 202 sends, to the network management service consumer entity 201 in response to the request message, the communication efficiency data that is of the network element set and that is obtained according to the first calculation formula.

In a possible implementation, the communication efficiency data is related to a ratio between the first calculation factor and the second calculation factor.

In another possible implementation, when the cost data is energy consumption data, the communication efficiency data is energy efficiency data.

In still another possible implementation, when the cost data is carbon emission data, the communication efficiency data is carbon efficiency data.

In still another possible implementation, the carbon emission data is real-time data collected from the network element set, the carbon emission data is predicted data obtained based on historical carbon emission data associated with the network element set, or the carbon emission data is obtained based on energy consumption data.

In this implementation, the carbon emission data may be the real-time data collected from the network element set, or may be the predicted data obtained based on the historical carbon emission data associated with the network element set, or may be obtained based on the energy consumption data. When the network management service provider entity cannot obtain the carbon emission data in time (for example, the network element set has a weak data processing capability or is performing another task), a prediction function of the network management service provider entity may be used to obtain the predicted data based on the historical carbon emission data associated with the network element set. In this way, timeliness and accuracy of feedback of the carbon emission data can be ensured.

In still another possible implementation, the energy consumption data is real-time data collected from the network element set, or the energy consumption data is predicted data obtained based on historical energy consumption data associated with the network element set.

In this implementation, the energy consumption data may be the real-time data collected from the network element set, or may be the predicted data obtained based on the historical energy consumption data associated with the network element set. When the network management service provider entity cannot obtain the energy consumption data in time (for example, the network element set has a weak data processing capability or is performing another task), a prediction function of the network management service provider entity may be used to obtain the predicted data based on the historical energy consumption data associated with the network element set. In this way, timeliness and accuracy of feedback of the energy consumption data can be ensured.

In still another possible implementation, the service measurement data is real-time data collected from the network element set, or the service measurement data is predicted data obtained based on historical service measurement data associated with the network element set.

In this implementation, the service measurement data may be the real-time data collected from the network element set, or may be the predicted data obtained based on the historical service measurement data associated with the network element set. When the network management service provider entity cannot obtain the service measurement data in time (for example, the network element set has a weak data processing capability or is performing another task), a prediction function of the network management service provider entity may be used to obtain the predicted data based on the historical service measurement data associated with the network element set. In this way, timeliness and accuracy of feedback of the service measurement data can be ensured.

In still another possible implementation, the request message further includes an identity of the at least one communication network element in the network element set.

In still another possible implementation, the request message further includes an identity corresponding to the first calculation formula.

In this implementation, the identity uniquely identifies the communication efficiency data, and the identity is in one-to-one correspondence with the first calculation formula.

In still another possible implementation, the method further includes: obtaining the identity and/or the first calculation formula based on an input of a user.

In this implementation, the user may customize an identity and a calculation formula of communication efficiency data, so that communication efficiency data can be flexibly obtained.

In still another possible implementation, the method further includes: presenting the first calculation factor and/or the second calculation factor for the user to select.

In this implementation, the user may flexibly select a first calculation factor and a second calculation factor, so that a calculation formula of communication efficiency data can be flexibly constructed.

In still another possible implementation, the method further includes: receiving the first calculation factor and/or the second calculation factor from an OAM or a third-party server; or obtaining the first calculation factor and/or the second calculation factor from a profile.

In still another possible implementation, the identity further corresponds to a second calculation formula for calculating the communication efficiency data of the network element set, and the request message is used to request to replace the second calculation formula with the first calculation formula.

In this implementation, the network management service consumer entity may further request to update the calculation formula of the communication efficiency data, to obtain communication efficiency data needed by the network management service consumer entity.

In a possible implementation, the method further includes: parsing the first calculation formula; and checking the first calculation formula.

In this implementation, because the calculation formula of the communication efficiency data in this application is customized by a user, after receiving the request message, the network management service provider entity needs to parse and check the calculation formula of the communication efficiency data.

The customized calculation formula of the communication efficiency data includes a number, a first calculation factor, a second calculation factor, and an operator. The network management service provider entity may pre-store a plurality of numbers, a plurality of first calculation factors, a plurality of second calculation factors, and a plurality of operators. When the request message is received, the network management service provider entity compares the pre-stored numbers, calculation factors, and operators with those in the calculation formula of the communication efficiency data in the request message, to parse out the calculation formula of the communication efficiency data.

The network management service provider entity checks whether the calculation formula of the communication efficiency data is valid. If the identity of the communication efficiency data and the calculation formula of the communication efficiency data meet a requirement, the calculation formula is valid; or if the identity of the communication efficiency data and the calculation formula of the communication efficiency data do not meet a requirement, the calculation formula is invalid.

In still another possible implementation, the first calculation formula further includes an operator, where the operator is for calculating the first calculation factor and the second calculation factor; and checking the first calculation formula includes at least one of the following operations: checking whether the first calculation factor and the second calculation factor comply with a standard definition; or checking whether the operator complies with a standard definition.

In this implementation, whether the first calculation factor and the second calculation factor in the first calculation formula comply with the standard definition is checked. For example, whether the first calculation factor and the second calculation factor can be found in an existing standard is checked. If the first calculation factor and the second calculation factor cannot be found, the first calculation formula is considered as invalid; or if the first calculation factor and the second calculation factor can be found, the first calculation formula is considered as valid.

Whether the operator in the first calculation formula complies with the standard definition is checked. For example, whether the operator in the first calculation formula input by the user can be normally operated is checked. For example, if a special character like @, #, or % appears, operation cannot be normally performed according to the first calculation formula. In this case, the first calculation formula is considered as invalid. If the foregoing special character does not appear, the first calculation formula is considered as valid.

In still another possible implementation, the request message further includes the identity corresponding to the first calculation formula.

In this implementation, the identity uniquely identifies the communication efficiency data, and the identity is in one-to-one correspondence with the first calculation formula.

In still another possible implementation, the method further includes: checking whether the identity is the same as an identity defined in a standard.

In this implementation, because the identity of the communication efficiency data in this application is customized by the user, whether the identity of the communication efficiency data is valid needs to be checked. If the identity of the communication efficiency data meets a requirement, the identity of the communication efficiency data is valid; or if the identity of the communication efficiency data does not meet a requirement, the identity of the communication efficiency data is invalid. The network management service provider entity may first check an identity that is of communication efficiency data and that is defined in the existing standard for the identity. If the identity cannot be found, a communication efficiency data list customized by the user is then checked for the identity. If the identity cannot be found in both manners, the checking is considered as invalid.

In this application, operations such as data collection and prediction performed by the network management service provider entity 202 may be performed by a network twin in the network management service provider entity 202.

Digital twin (digital twin, DT) is a technology that is becoming increasingly related to system automation. The DT is a virtual copy of a real-world system, that is, a "physical" system, on which an operation can be performed. Facing continuously increasing service types, a continuously expanding scale, and continuously escalating complexity, a communication network also needs to use a digital twin technology to seek a better solution transcending a physical network. A network twin, as an application of the digital twin technology in the field of communication networks, aims to develop various network applications and implement efficient data-driven network management and maintenance.

The network twin is a digital twin whose physical counterpart is a communication network or a part of the communication network. The communication network may include, for example, a physical network element and component, a virtual network function (virtual network function, VNF) (that is, a network function element instantiated as a software-based entity), and a physical host, a service, and traffic that are used for the VNF.

Specifically, the network twin means that a digital mirror of the physical network (physical network) is established in a digitalized manner, and the physical network is digitalized based on historical network data, real-time network data, and an algorithm model of the physical network, to implement synchronous analysis and prediction on the physical network, and improve and optimize the physical network. That is, the network twin includes a digital representation of the physical network and is used for simulating the physical network. The digital representation includes an algorithm model, data, and the like. The network twin may also be referred to as a network twin entity, a digital twin, or a digital twin entity. This is not limited in this application. The physical network is a network formed by connecting various types of physical devices or network elements (for example, a host, a router, or a switch) and a medium (an optical cable, a cable, a twisted pair, or the like) in a network. The physical network may be a mobile access network, a transport network, a mobile core network, a backbone network, or the like. The physical network may alternatively be a data center network, a campus network, an industrial internet of things, or the like. Network data may also be referred to as network running data, indicates a running status of the physical network, and may be configuration parameters, alarm data, performance data, and the like of the physical devices or the network elements.

Based on the foregoing system, the following further describes in detail a data obtaining method provided in an embodiment of this application.

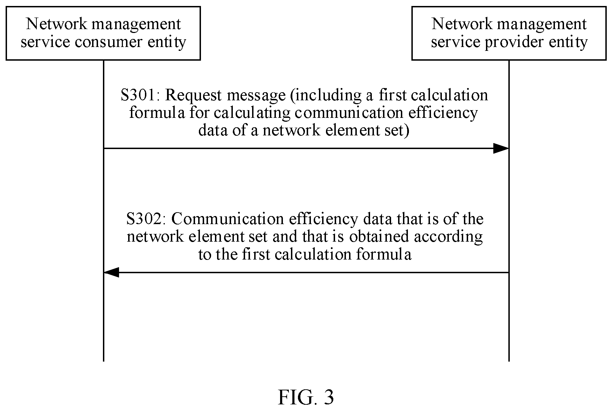

FIG. 3 is a schematic flowchart of a data obtaining method according to an embodiment of this application. For example, the method may include the following steps.

S301: A network management service consumer entity sends a request message to a network management service provider entity. Correspondingly, the network management service provider entity receives the request message.

The request message includes a first calculation formula for calculating communication efficiency data of a network element set.

The first calculation formula includes a first calculation factor and a second calculation factor. The first calculation factor indicates service measurement data associated with the network element set, and the second calculation factor indicates cost data associated with the network element set. The service measurement data is a measurement of service data of the network element set, and is a valid output provided based on unit costs. The cost data is costs paid for generating, processing, or performing transmission of the service data of the network element set. The first calculation factor and the second calculation factor are indicators defined in a standard.

For example, the communication efficiency data (or the first calculation formula) is related to a ratio between the first calculation factor and the second calculation factor.

The network element set includes at least one communication network element. For example, the network element set may be a network function (network function, NF) entity mentioned in the TS 28.310 protocol.

In an implementation, when the cost data is energy consumption data, the communication efficiency data is energy efficiency (EnergyEfficiency) data.

Energy efficiency is an effective output provided based on unit energy consumption.

In the calculation formula of the energy efficiency data, the first calculation factor indicates the service measurement data associated with the network element set, and the second calculation factor indicates energy consumption data associated with the network element set.

The service measurement data may be a quantity of users, bandwidth, a quantity of sessions, a throughput, and the like. It may be understood that the service measurement data may be a data volume mentioned in the TS 28.310 protocol, or may be other data for measuring a service. This is not limited in this application. The service measurement data may be real-time data collected from the network element set, or the service measurement data may be predicted data obtained based on historical service measurement data associated with the network element set.

The energy consumption data may be energy consumed by the network element set. It may be understood that the energy consumption data associated with the network element set may include energy consumption data of the network element set, and also include energy consumption data of a related matched device of the network element set. The energy consumption data associated with the network element set may be real-time data collected from the network element set, or the energy consumption data may be predicted data obtained based on historical energy consumption data associated with the network element set.

For example, the energy efficiency calculation formula defined in the TS 28.310 protocol is as follows: ${EE}_{MN , DV} = \frac{{DV}_{MN}}{{EC}_{MN}}$

*DV_{MN}* is a data volume (data volume, DV) of a mobile network (mobile network, MN), and *EC_{MN}* is energy consumption (energy consumption, EC) of a network element set in the mobile network. The data volume may be, for example, a throughput, and a unit may be bit (bit); and a unit of the energy consumption is joule (J). Therefore, a unit of *EE_{MN,DV}* is bit/J.

In another implementation, when the cost data is carbon emission data, the communication efficiency data is carbon efficiency data.

Carbon efficiency is an effective output provided based on unit carbon emission.

In the calculation formula of the carbon efficiency data, the first calculation factor indicates the service measurement data associated with the network element set, and the second calculation factor indicates carbon emission data associated with the network element set.

For a meaning of the service measurement data, refer to the foregoing descriptions.

The carbon emission data may be the carbon emission data associated with the network element set. The carbon emission data may be real-time data collected from the network element set, the carbon emission data may be predicted data obtained based on historical carbon emission data associated with the network element set, or the carbon emission data may be obtained based on energy consumption data. Specifically, a carbon emission amount may be equal to the energy consumption data multiplied by a carbon emission factor. A specific carbon emission factor may be calculated based on a proportion of non-green energy used in a communication system and a proportion of a specific power generation material of the non-green energy (for example, coal fired for power generation or oil fired for power generation) used in the communication system.

In this embodiment, the network management service consumer entity may include the calculation formula in the request message, instead of using only a calculation formula stored in the network management service provider entity to calculate communication efficiency data in the conventional technology. The calculation formula may be customized by a user.

Further, the first calculation formula may further include a number and an operator. For example, an identity of energy efficiency is EE_RAN_RRC, and a calculation formula of the energy efficiency is 10000*(RRC.ConnEstabSucc/RRC.ConnEstabAtt)/PEE.Energy. 10000 is a number in the calculation formula, and is generally a constant. The calculation formula includes the following two first calculation factors: a quantity of successful radio resource control connection establishments (RRC.ConnEstabSucc) and a quantity of radio resource control connection establishment attempts (RRC.ConnEstabAtt), and the calculation formula includes the following second calculation factor: energy consumption (PEE.Energy). Operators in the calculation formula include multiplication (*) and division (/), where the operators are for calculating the first calculation factor and the second calculation factor.

RRC.ConnEstabSucc indicates the quantity of successful radio resource control (radio resource control, RRC) connection establishments. The data may be obtained from a base station. After receiving an RRC connection setup request (RRC connection setup request) of a terminal, the base station sends an RRC connection setup complete message (RRCSetupComplete message). RRC.ConnEstabSucc is increased by 1 each time the base station sends the RRC connection setup complete message or the terminal receives the RRC connection setup complete message.

RRC.ConnEstabAtt indicates the quantity of RRC connection establishment attempts. RRC.ConnEstabAtt is increased by 1 each time the base station receives the RRC connection setup request from the terminal. The data may be obtained from the base station.

PEE.Energy indicates energy consumption data associated with the base station and the terminal.

S302: The network management service provider entity sends, to the network management service consumer entity in response to the request message, the communication efficiency data that is of the network element set and that is obtained according to the first calculation formula. Correspondingly, the network management service consumer entity receives the communication efficiency data.

After receiving the request message, the network management service provider entity obtains the first calculation formula carried in the request message, and parses the first calculation formula. The network management service provider entity obtains, based on the first calculation factor and the second calculation factor that are included in the first calculation formula and that are obtained through parsing, the service measurement data and the cost data that are associated with the network element set. The network management service provider entity calculates the communication efficiency data according to the first calculation formula and the obtained service measurement data and cost data that are associated with the network element set. Then, the network management service provider entity sends the communication efficiency data of the network element set to the network management service consumer entity.

It may be understood that the first calculation factor and the second calculation factor correspond to data of a same time period, that is, the obtained service measurement data associated with the network element set and the obtained communication efficiency data correspond to the data of the same time period. For example, start time and end time of obtaining the data may be the same.

According to the data obtaining method provided in this embodiment of this application, the network management service consumer entity may send the calculation formula of communication efficiency data to the network management service provider entity, and the network management service provider entity may obtain the communication efficiency data of the network element set according to the calculation formula that is of the communication efficiency data and that is provided by the network management service consumer entity, and send the communication efficiency data to the network management service consumer entity. Therefore, communication efficiency data can be flexibly obtained based on a requirement of the network management service consumer entity.

The foregoing embodiment describes how to obtain the communication efficiency data. The following embodiment further describes how to obtain a calculation formula that is of communication efficiency data and that is customized by a user and how to check an identity and the calculation formula of the communication efficiency data that are customized by the user.

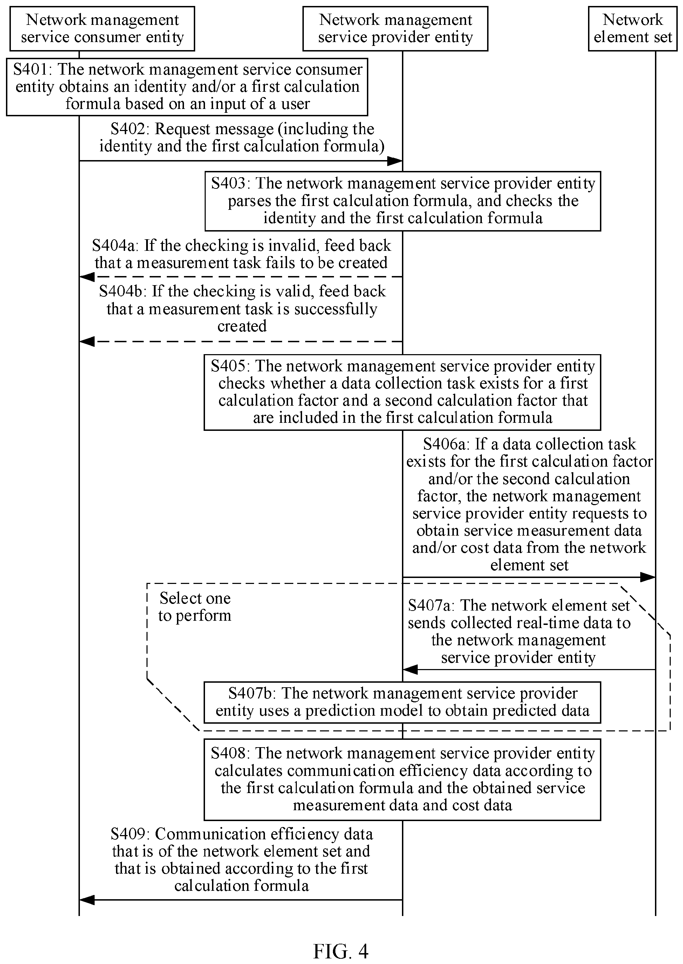

FIG. 4 is a schematic flowchart of another data obtaining method according to an embodiment of this application. For example, the method may include the following steps.

S401: A network management service consumer entity obtains an identity and/or a first calculation formula based on an input of a user.

In this embodiment, the network management service consumer entity may obtain, through some interaction manners, the identity and/or the first calculation formula corresponding to the identity that are/is input by the user. The identity and the first calculation formula are customized by the user.

For example, the network management service consumer entity may receive at least one first calculation factor and/or at least one second calculation factor from an OAM or a third-party server, or obtain at least one first calculation factor and/or at least one second calculation factor from a profile of the network management service consumer entity. Then, the first calculation factor and/or the second calculation factor are presented for the user to select. The network management service consumer entity receives a first calculation factor and/or a second calculation factor that are/is selected by the user, generates the first calculation formula, and establishes a correspondence between the identity and the first calculation formula.

For a meaning of the first calculation formula, refer to the foregoing descriptions.

S402: The network management service consumer entity sends a request message to a network management service provider entity. Correspondingly, the network management service provider entity receives the request message.

The request message includes the identity corresponding to the first calculation formula (the identity is in one-to-one correspondence with the first calculation formula), the first calculation formula for calculating communication efficiency data of a network element set, and an identity of at least one communication network element in the network element set.

In an example, the request message may include a measurement category list, and the measurement category list is a list that already exists. The identity may be included in the existing measurement category list. The existing measurement category list indicates a to-be-measured type and KPI that are specified in a standard, and an unknown and invalid measurement type and KPI cannot be specified generally. In this example, logic of the existing measurement category list is modified, so that the list supports the identity input by the user. In addition, the existing measurement category list may further include an identity defined in a standard. The network management service provider entity may obtain, according to the method shown in FIG. 1, communication efficiency data defined in a standard. The request message may further include a communication efficiency list customized by the user, and the communication efficiency list includes the identity and the first calculation formula.

In another example, the identity may be included in a measurement list customized by the user. In this example, logic of an existing measurement category list is not modified because the existing measurement category list indicates a to-be-measured type and KPI that are specified in a standard, and an unknown and invalid measurement type and KPI cannot be specified generally. Instead, the measurement list customized by the user is introduced to specify measurement of communication efficiency customized by the user. In addition, the request message may further include an existing measurement category list, where the existing measurement category list includes an energy efficiency identity defined in a standard. The network management service provider entity may obtain, according to the method shown in FIG. 1, communication efficiency data defined in a standard. The request message may further include a communication efficiency list customized by the user, and the communication efficiency list includes the identity and the first calculation formula.

In the foregoing two examples, the communication efficiency list customized by the user may include two attribute values: name and formula, which are used to respectively define an identity and a calculation formula of communication efficiency data. Details are shown in Table 1.

**Table 1**

| Attribute name | Qualifier | Descriptions |
|---|---|---|
| name | CM | Unique identity input by the user. |
| formula | CM | Calculation formula that is of communication efficiency data and that is input by the user, where the calculation formula includes a number, a first calculation factor, a second calculation factor, and an operator, and the first calculation factor and second calculation factor are indicators defined in a standard. |

S403: After receiving the request message, the network management service provider entity obtains the identity and the first calculation formula that are included in the request message, parses the first calculation formula, and checks the identity and the first calculation formula.

As described above, the first calculation formula of the communication efficiency data includes a number, a first calculation factor, a second calculation factor, and an operator. The first calculation factor and the second calculation factor are indicators defined in a standard. The network management service provider entity pre-stores a plurality of numbers, a plurality of first calculation factors, a plurality of second calculation factors, and a plurality of operators. When the request message is received, the network management service provider entity compares the pre-stored numbers, first calculation factors, second calculation factors, and operators with those in the first calculation formula in the request message, to parse out the first calculation formula.

In this embodiment, the identity and the calculation formula of the communication efficiency data are customized by the user. Therefore, the network management service provider entity needs to check whether the identity and the calculation formula of the communication efficiency data are valid. If the identity and the calculation formula of the communication efficiency data meet a requirement, the identity and the calculation formula of the communication efficiency data are valid; or if the identity and the calculation formula of the communication efficiency data do not meet a requirement, the identity and the calculation formula of the communication efficiency data are invalid.

The following manners may be used to check whether the identity customized by the user is valid.

In one manner, the network management service provider entity may first check an identity defined in an existing standard for the identity. If the identity cannot be found, the communication efficiency list customized by the user is then checked for the identity. If the identity cannot be found in both manners, the checking is considered as invalid.

In another manner, whether the identity is the same as an identity defined in a standard may be checked. If the identity is the same as the identity defined in the standard, the identity customized by the user is considered as invalid; or if the identity is different from the identity defined in the standard, the identity customized by the user is considered as valid.

The following manners may be used to check whether the calculation formula that is of the communication efficiency data and that is customized by the user is valid.

In one manner, whether the first calculation factor and the second calculation factor that are included in the calculation formula of the communication efficiency data comply with a standard definition may be checked. For example, whether the first calculation factor and the second calculation factor that are included in the calculation formula of the communication efficiency data can be found in the existing standard is checked. If the first calculation factor and the second calculation factor cannot be found, the calculation formula is considered as invalid; or if the first calculation factor and the second calculation factor can be found, the calculation formula is considered as valid.

In another manner, whether the operator included in the calculation formula of the communication efficiency data complies with a standard definition may be checked. For example, whether the operator in the calculation formula that is of the communication efficiency data and that is input by the user can be normally operated is checked. For example, if a special character like @, #, or % appears, operation cannot be normally performed according to the calculation formula. In this case, the calculation formula is considered as invalid. If the foregoing special character does not appear, the calculation formula is considered as valid.

S404a: If the checking is invalid, the network management service provider entity feeds back, to the network management service consumer entity, that a measurement task fails to be created.

After the network management service provider entity feeds back that the measurement task fails to be created, the procedure ends.

The foregoing step S404a is optional (represented by a dashed line in the figure). After detecting that the identity and the calculation formula of the communication efficiency data are invalid, the network management service provider entity may directly end the procedure. In this case, the network management service consumer entity considers that the measurement task fails to be created.

S404b: If the checking is valid, the network management service provider entity feeds back, to the network management service consumer entity, that a measurement task is successfully created.

Step S404b is optional (represented by a dashed line in the figure). After the network management service provider entity detects that the identity and the calculation formula of the communication efficiency data are valid, the network management service consumer entity considers that the measurement task is successfully created.

S405: The network management service provider entity checks whether a data collection task exists for the first calculation factor and the second calculation factor in the first calculation formula.

When the request message is used to request to obtain energy efficiency data, the first calculation factor indicates service measurement data associated with the network element set, and the second calculation factor indicates energy consumption data associated with the network element set. When the request message is used to request to obtain carbon efficiency data, the first calculation factor indicates service measurement data associated with the network element set, and the second calculation factor indicates carbon emission data associated with the network element set. Because both the first calculation factor and the second calculation factor indicate data associated with the network element set, after receiving the request message, the network management service provider entity needs to check whether the data collection task exists for the first calculation factor and the second calculation factor in the first calculation formula, that is, whether corresponding data needs to be obtained from the network element set.

If the network management service provider entity checks, after receiving the request message, that the network management service provider entity has collected the data indicated by the first calculation factor and/or the second calculation factor, the network management service provider entity determines that no data collection task exists. For example, a digital twin of the network management service provider entity periodically or irregularly obtains data from a physical network. Therefore, after receiving the request message, the network management service provider entity may detect that the network management service provider entity has collected the data indicated by the first calculation factor and the second calculation factor that are included in the first calculation formula.

If the network management service provider entity checks, after receiving the request message, that the network management service provider entity does not pre-collect the data indicated by the first calculation factor and the second calculation factor that are included in the first calculation formula, the network management service provider entity determines that the data collection task exists.

S406a: If the data collection task exists, the network management service provider entity requests to obtain, from the network element, the data indicated by the first calculation factor and/or the second calculation factor.

If a data collection task exists for the first calculation factor and/or the second calculation factor that are/is in the first calculation formula, the network management service provider entity may send a collection request to the corresponding network element set to request to obtain the data indicated by the first calculation factor and/or the second calculation factor.

When determining that a data collection task exists, the network management service provider entity may choose, depending on whether the data indicated by the first calculation factor and/or the second calculation factor can be obtained in time, to perform either step S407a or step S407b.

S407a: The network element set sends collected real-time data to the network management service provider entity.

After receiving the collection request, the network element collects the service measurement data and/or the cost data in real time, and sends the collected real-time data to the network management service provider entity.

The real-time data includes the service measurement data and/or cost data.

The service measurement data is real-time data collected from the network element set.

The cost data includes either of the energy consumption data and the carbon emission data. The energy consumption data is real-time data collected from the network element set, or the carbon emission data is real-time data collected from the network element set.

S407b: The network management service provider entity uses a prediction model to obtain predicted data.

When the network management service provider entity cannot obtain the service measurement data and/or cost data from the network element set in time (for example, the network element set has a weak data processing capability or is performing another task), or the digital twin of the network management service provider entity has a good prediction capability, to ensure timeliness and accuracy of feedback of the communication efficiency data, or to reduce communication overheads, a data prediction capability is introduced into the network management service provider entity.

The network management service provider entity may use the prediction model to obtain the predicted data based on historical service measurement data associated with the network element set. The service measurement data is predicted data obtained based on the historical service measurement data associated with the network element set. The network management service provider entity may use the prediction model to obtain the predicted data based on cost data associated with the network element set. The cost data includes either of the energy consumption data and the carbon emission data. The energy consumption data is predicted data obtained based on historical energy consumption data associated with the network element set; and the carbon emission data is predicted data obtained based on historical carbon emission data associated with the network element set.

The carbon emission data may also be obtained based on energy consumption data. The energy consumption data may be real-time data collected from the network element set, or predicted data obtained based on historical energy consumption data associated with the network element set. Specifically, a carbon emission amount may be equal to the energy consumption data multiplied by a carbon emission factor. A specific carbon emission factor may be calculated based on a proportion of non-green energy used in a communication system and a proportion of a specific power generation material of the non-green energy (for example, coal fired for power generation or oil fired for power generation) used in the communication system.

For example, the network management service provider entity may obtain historical service measurement data associated with the network element set in a first time period, to predict predicted data; and obtain historical cost data associated with the network element set in the first time period, to predict predicted data. In other words, the first calculation factor and the second calculation factor correspond to data in a same time period (for example, the first time period).

The network management service provider entity cannot obtain, from the network element set in time, the service measurement data associated with the network element set and/or the cost data associated with the network element set. For example, the network management service provider entity may send a collection request to the network element set, and start a timer when the collection request is sent. When no data returned by the network element set is received after the timer expires, the predicted data may be obtained by using the prediction model.

S408: The network management service provider entity calculates the communication efficiency data according to the first calculation formula and the obtained service measurement data and cost data.

After obtaining the data indicated by the first calculation factor and the second calculation factor, the network management service provider entity may substitute the data indicated by the first calculation factor and the second calculation factor into the first calculation formula, to calculate the communication efficiency data.

The request message may be used to request to obtain a plurality of pieces of communication efficiency data. For each piece of to-be-obtained communication efficiency data, steps S405 to S408 are cyclically performed.

S409: The network management service provider entity sends, to the network management service consumer entity, the communication efficiency data obtained according to the first calculation formula. Correspondingly, the network management service consumer entity receives the communication efficiency data.

After calculating the communication efficiency data, the network management service provider entity sends the communication efficiency data to the network management service consumer entity.

It may be understood that, if the existing measurement category list in the request message or the measurement list that is customized by the user and that is in the request message carries a plurality of identities, in other words, the network management service consumer entity requests to measure a plurality of types of communication efficiency data, the network management service consumer entity may send the plurality of identities and communication efficiency data corresponding to each identity, where the identity further identifies the communication efficiency data.

Further, the network management service provider entity may store the identity and the first calculation formula locally or in the third-party server. If the network management service consumer entity requests to obtain the communication efficiency data again, the network management service consumer entity may choose to include the identity in the request message, but no longer needs to include the first calculation formula. The network management service provider entity may find, locally or in the third-party server based on the identity in the request message, the first calculation formula corresponding to the identity. Therefore, overheads of the request message can be reduced.

Further, the network management service provider entity may store the identity and the first calculation formula locally or in the third-party server. If the network management service consumer entity requests to obtain the communication efficiency data again, and the calculation formula of the communication efficiency data is updated, the network management service consumer entity may choose to include, in the request message, the identity and a second calculation formula obtained through the update. After receiving the request message, the network management service provider entity searches for, based on the identity in the request message, the first calculation formula that is stored locally in the network management service provider entity or in the third-party server and that corresponds to the identity, and detects that the first calculation formula that is stored locally in the network management service provider entity or in the third-party server and that corresponds to the identity is partially or completely different from the second calculation formula carried in the request message. In this case, the network management service provider entity updates, according to the second calculation formula carried in the request message, the first calculation formula that is stored locally in the network management service provider entity or in the third-party server and that corresponds to the identity.

The network management service provider entity obtains, according to the second calculation formula that is obtained through the update and that is carried in the request message, data indicated by a third calculation factor and a fourth calculation factor that are included in the second calculation formula, performs calculation to obtain communication efficiency data, and returns the communication efficiency data to the network management service consumer entity. The third calculation factor indicates service measurement data associated with the network element set, and the fourth calculation factor indicates cost data associated with the network element set.

According to the data obtaining method provided in this embodiment of this application, the network management service consumer entity may send the calculation formula of the communication efficiency data to the network management service provider entity, and the network management service provider entity may obtain the communication efficiency data according to the calculation formula that is of the communication efficiency data and that is provided by the network management service consumer entity, and send the communication efficiency data to the network management service consumer entity. Therefore, communication efficiency data can be flexibly obtained based on a requirement of the network management service consumer entity, and is not limited to communication efficiency data defined in a standard.

The service measurement data indicated by the first calculation factor may be the real-time data collected from the network element set, or may be the predicted data obtained through prediction based on the historical service measurement data associated with the network element set. The cost data indicated by the second calculation factor may be the real-time data collected from the network element set, or may be the predicted data obtained through prediction based on the historical cost data associated with the network element set. When the network management service provider entity cannot obtain, from the network element set in time, the data indicated by the first calculation factor and/or the second calculation factor (for example, the network element set has the weak data processing capability or is performing another task), or the digital twin of the network management service provider entity has the good prediction capability, to ensure the timeliness and the accuracy of the feedback of the communication efficiency data, or to reduce the communication overheads, a prediction function of the network management service provider entity may be used to obtain the predicted data through prediction based on the historical service measurement data associated with the network element set, and/or obtain the predicted data through prediction based on the historical cost data associated with the network element set. In this way, the timeliness and the accuracy of the feedback of the communication efficiency data can be ensured.

It may be understood that, in the foregoing embodiments, the method and/or the steps implemented by the network management service provider entity may alternatively be implemented by a component (for example, a chip or a circuit) that may be used in the network management service provider entity, and the method and/or the steps implemented by the network management service consumer entity may alternatively be implemented by a component (for example, a chip or a circuit) that may be used in the network management service consumer entity.

The foregoing mainly describes the solutions provided in embodiments of this application from a perspective of interaction between entities. Correspondingly, an embodiment of this application further provides a data obtaining apparatus. The data obtaining apparatus is configured to implement the foregoing methods. The data obtaining apparatus may be the network management service provider entity in the foregoing method embodiments, or may be a component that may be used in the network management service provider entity. Alternatively, the data obtaining apparatus may be the network management service consumer entity in the foregoing method embodiments, or may be a component that may be used in the network management service consumer entity. It may be understood that, to implement the foregoing functions, the data obtaining apparatus includes a corresponding hardware structure and/or software module for performing the functions. A person skilled in the art should easily be aware that, in combination with units and algorithm steps of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, division into functional modules may be performed on the data obtaining apparatus based on the foregoing method embodiments. For example, division into functional modules may be performed based on corresponding functions, or two or more functions may be integrated into one processing unit. The integrated module may be implemented in a form of hardware, or may be implemented in a form of a software functional module. It should be noted that, in embodiments of this application, module division is an example, and is merely logical function division. In actual implementation, another division manner may be used.

Based on a same concept of the foregoing data obtaining method, this application further provides the following data obtaining apparatus:

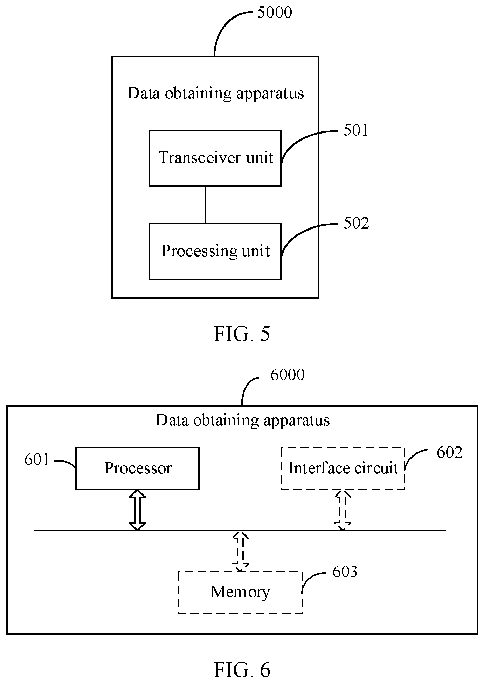

FIG. 5 is a diagram of a structure of a data obtaining apparatus according to an embodiment of this application. The data obtaining apparatus 5000 includes a transceiver unit 501 and a processing unit 502.

When the data obtaining apparatus is configured to implement functions of the network management service provider entity in the foregoing method embodiments, the transceiver unit 501 is configured to perform functions of the network management service provider entity in steps S301 and S302 in the embodiment shown in FIG. 3, or the transceiver unit 501 is configured to perform functions of the network management service provider entity in steps S402, S404a, S404b, S406a, S407a, and S409 in the embodiment shown in FIG. 4; and the processing unit 502 is configured to perform steps S403, S405, S407b, and S408 in the embodiment shown in FIG. 4.

When the data obtaining apparatus is configured to implement functions of the network management service consumer entity in the foregoing method embodiments, the transceiver unit 501 is configured to perform functions of the network management service consumer entity in steps S301 and S302 in the embodiment shown in FIG. 3, or the transceiver unit 501 is configured to perform functions of the network management service consumer entity in steps S402, S404a, S404b, and S409 in the embodiment shown in FIG. 4; and the processing unit 502 is configured to perform step S401 in the embodiment shown in FIG. 4.

For specific implementations of the transceiver unit 501 and the processing unit 502, refer to the descriptions in the foregoing method embodiments. Details are not described herein again.

FIG. 6 is a diagram of a structure of another data obtaining apparatus according to an embodiment of this application. The data obtaining apparatus 6000 includes a processor 601, and may further include an interface circuit 602 and a memory 603 (represented by dashed lines in the figure). The processor 601 and the interface circuit 602 are coupled to each other. It may be understood that the interface circuit 602 may be a transceiver or an input/output interface. The memory 603 is configured to: store instructions executed by the processor 601, store input data needed by the processor 601 to run the instructions, or store data generated by running the instructions by the processor 601.

When the data obtaining apparatus is configured to implement functions of the network management service provider entity in the foregoing method embodiments, the interface circuit 602 is configured to perform functions of the network management service provider entity in steps S301 and S302 in the embodiment shown in FIG. 3, or the interface circuit 602 is configured to perform functions of the network management service provider entity in steps S402, S404a, S404b, S406a, S407a, and S409 in the embodiment shown in FIG. 4; and the processor 601 is configured to perform steps S403, S405, S407b, and S408 in the embodiment shown in FIG. 4.

When the data obtaining apparatus is configured to implement functions of the network management service consumer entity in the foregoing method embodiments, the interface circuit 602 is configured to perform functions of the network management service consumer entity in steps S301 and S302 in the embodiment shown in FIG. 3, or the interface circuit 602 is configured to perform functions of the network management service consumer entity in steps S402, S404a, S404b, and S409 in the embodiment shown in FIG. 4; and the processor 601 is configured to perform step S401 in the embodiment shown in FIG. 4.

When the data obtaining apparatus is a chip used in the network management service provider entity, the chip implements the functions of the network management service provider entity in the foregoing method embodiments. The chip receives information from another module (for example, a radio frequency module or an antenna) in the network management service provider entity, where the information is sent by the network management service consumer entity to the network management service provider entity; or the chip sends information to another module (for example, a radio frequency module or an antenna) in the network management service provider entity, where the information is sent by the network management service provider entity to the network management service consumer entity.

When the data obtaining apparatus is a chip used in the network management service consumer entity, the chip implements the functions of the network management service consumer entity in the foregoing method embodiments. The chip receives information from another module (for example, a radio frequency module or an antenna) in the network management service consumer entity, where the information is sent by the network management service provider entity to the network management service consumer entity; or the chip sends information to another module (for example, a radio frequency module or an antenna) in the network management service consumer entity, where the information is sent by the network management service consumer entity to the network management service provider entity.

In addition, it should be noted that the transceiver unit and/or the processing unit may be implemented by using a virtual module. For example, the processing unit may be implemented by using a software functional unit or a virtual apparatus, and the transceiver unit may be implemented by using a software function or a virtual apparatus. Alternatively, the processing unit or the transceiver unit may be implemented by using a physical apparatus. For example, if the apparatus is implemented by using a chip/chip circuit, the transceiver unit may be an input/output circuit and/or a communication interface, and performs an input operation (corresponding to the foregoing receiving operation) and an output operation (corresponding to the foregoing sending operation); and the processing unit is an integrated processor, a microprocessor, or an integrated circuit.

Division into modules in this application is an example, is merely logical function division, and may be other division during actual implementation. In addition, functional modules in examples of this application may be integrated into one processor, each of the modules may exist alone physically, or two or more modules may be integrated into one module. The integrated module may be implemented in a form of hardware, or may be implemented in a form of a software functional module.

It may be understood that, the processor in this embodiment of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, any conventional processor, or the like.

An embodiment of this application further provides a computer-readable storage medium. The computer-readable storage medium stores a computer program or instructions. When the computer program or the instructions are executed, the methods in the foregoing embodiments are implemented.

An embodiment of this application further provides a computer program product including instructions. When the instructions are run on a computer, the computer is enabled to perform the methods in the foregoing embodiments.

An embodiment of this application further provides a data obtaining system, including the foregoing data obtaining apparatus.

An embodiment of this application further provides a circuit. The circuit is coupled to a memory, and the circuit is configured to perform the methods in the foregoing embodiments. The circuit may include a chip circuit.

It should be noted that one or more of the foregoing units or elements may be implemented by software, hardware, or a combination of software and hardware. When any one of the foregoing units or elements is implemented by software, the software exists in a form of computer program instructions, and is stored in the memory. The processor may be configured to execute the program instructions and implement the foregoing method procedure.

In this application, the processor may be a general-purpose processor, a digital signal processor, an application-specific integrated circuit, a field programmable gate array or another programmable logic device, a discrete gate or transistor logic device, or a discrete hardware component, and may implement or perform methods, steps, and logical block diagrams that are disclosed in this application. The general-purpose processor may be a microprocessor, any conventional processor, or the like. The steps of the methods disclosed with reference to this application may be directly implemented by a hardware processor, or may be implemented by a combination of hardware and a software module in a processor.

The processor may be built in a system on chip (system on chip, SoC) or an ASIC, or may be an independent semiconductor chip. In addition to a core for executing software instructions to perform an operation or processing, the processor may further include a necessary hardware accelerator, for example, a field programmable gate array (field programmable gate array, FPGA), a programmable logic device (programmable logic device, PLD), or a logic circuit that implements a dedicated logic operation.

When the foregoing units or elements are implemented by hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device, and may run necessary software or does not depend on software to perform the foregoing method procedures.

Optionally, an embodiment of this application further provides a chip system, including at least one processor and an interface. The at least one processor is coupled to a memory through the interface. When the at least one processor executes a computer program or instructions in the memory, the chip system is enabled to perform the method in any one of the foregoing method embodiments. Optionally, the chip system may include a chip, or may include a chip and another discrete device. This is not specifically limited in this embodiment of this application.

In this application, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). The memory is any other medium that can carry or store expected program code in a form of instructions or a data structure and that can be accessed by a computer, but is not limited thereto. The memory in this application may alternatively be a circuit or any other apparatus that can implement a storage function, and is configured to store program instructions and/or data.

At least one (item) described in this application below indicates one (item) or more (items). A plurality of (items) means two (items) or more than two (items). The term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects. In addition, it should be understood that although the terms first, second, and the like may be used in this application to describe objects, these objects are not limited by these terms. These terms are merely for distinguishing the objects from each other. The terms "first", "second", and the like are used merely for description, and shall not be understood as an indication or implication of relative importance or an implicit indication of a quantity of indicated technical features. Therefore, a feature limited by "first", "second", or the like may explicitly or implicitly include one or more features. In descriptions of this application, unless otherwise stated, "a plurality of" means two or more than two.

Terms "including", "having", and any other variant thereof mentioned in descriptions of this application below are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device. It should be noted that in this application, terms such as "example" or "for example" represent giving an example, an illustration, or a description. Any method or design scheme described in this application as "example" or "for example" should not be explained as being more preferred or having more advantages than another method or design scheme. Exactly, use of the term like "example" or "for example" is intended to present a related concept in a specific manner.

The following describes implementations of this application by using specific embodiments. A person skilled in the art may understand other advantages and effects of this application based on content disclosed in this specification. Although this application is described with reference to example embodiments, this does not mean that features of this application are limited only to this implementation. On the contrary, a purpose of describing this application with reference to an implementation is to cover another option or modification that may be derived based on claims of this application. To improve an in-depth understanding of this application, the following descriptions include a plurality of specific details. This application may alternatively be implemented without using these details. In addition, to avoid confusion or blurring a focus of this application, some specific details are omitted from the descriptions. It should be noted that embodiments in this application and the features in embodiments may be mutually combined in a case of no conflict.

All or some of the foregoing embodiments may be implemented by software, hardware, firmware, or any combination thereof. When a software program is used for the implementation, embodiments may be implemented completely or partially in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a digital versatile disc (digital versatile disc, DVD)), a semiconductor medium (for example, a solid-state drive (solid-state drive, SSD)), or the like.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

In the foregoing embodiments, descriptions of each embodiment have respective focuses. For a part that is not described in detail in an embodiment, refer to related descriptions in other embodiments.

Components in the apparatus in embodiments of this application may be combined, divided, and deleted based on an actual requirement. A person skilled in the art may combine different embodiments or features of different embodiments described in this specification.

The foregoing embodiments are merely for describing the technical solutions in this application, but not for limiting this application. Although this application is described in detail with reference to the foregoing embodiments, a person of ordinary skill in the art should understand that modifications can be made to the technical solutions described in the foregoing embodiments, or equivalent replacements can be made to some technical features thereof without departing from the scope of the technical solutions of embodiments of this application.

In this application, without a logical contradiction, mutual reference can be made between examples. For example, mutual reference can be made between methods and/or terms in method embodiments, mutual reference can be made between functions and/or terms in apparatus embodiments, and mutual reference can be made between functions and/or terms in apparatus examples and method examples.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A data obtaining method, wherein the method comprises:
sending a request message, wherein the request message comprises a first calculation formula for calculating communication efficiency data of a network element set, the first calculation formula comprises a first calculation factor and a second calculation factor, the first calculation factor indicates service measurement data associated with the network element set, the second calculation factor indicates cost data associated with the network element set, and the network element set comprises at least one communication network element; and
receiving the communication efficiency data that is of the network element set and that is obtained according to the first calculation formula.

2. The method according to claim 1, wherein the communication efficiency data is related to a ratio between the first calculation factor and the second calculation factor.

3. The method according to claim 1 or 2, wherein when the cost data is energy consumption data, the communication efficiency data is energy efficiency data.

4. The method according to claim 1 or 2, wherein when the cost data is carbon emission data, the communication efficiency data is carbon efficiency data.

5. The method according to claim 4, wherein the carbon emission data is real-time data collected from the network element set, the carbon emission data is predicted data obtained based on historical carbon emission data associated with the network element set, or the carbon emission data is obtained based on energy consumption data.

6. The method according to claim 3 or 5, wherein the energy consumption data is real-time data collected from the network element set, or the energy consumption data is predicted data obtained based on historical energy consumption data associated with the network element set.

7. The method according to any one of claims 1 to 6, wherein the service measurement data is real-time data collected from the network element set, or the service measurement data is predicted data obtained based on historical service measurement data associated with the network element set.

8. The method according to any one of claims 1 to 7, wherein the request message further comprises an identity of the at least one communication network element in the network element set.

9. The method according to any one of claims 1 to 8, wherein the request message further comprises an identity corresponding to the first calculation formula.

10. The method according to claim 9, wherein the method further comprises:
obtaining the identity and/or the first calculation formula based on an input of a user.

11. The method according to claim 10, wherein the method further comprises:
presenting the first calculation factor and/or the second calculation factor for the user to select.

12. The method according to any one of claims 1 to 11, wherein the method further comprises:
receiving the first calculation factor and/or the second calculation factor from an operation, administration, and maintenance OAM or a third-party server; or
obtaining the first calculation factor and/or the second calculation factor from a profile.

13. The method according to any one of claims 9 to 12, wherein the identity further corresponds to a second calculation formula for calculating the communication efficiency data of the network element set, and the request message is used to request to replace the second calculation formula with the first calculation formula.

14. A data obtaining method, wherein the method comprises:
receiving a request message, wherein the request message comprises a first calculation formula for calculating communication efficiency data of a network element set, the first calculation formula comprises a first calculation factor and a second calculation factor, the first calculation factor indicates service measurement data associated with the network element set, the second calculation factor indicates cost data associated with the network element set, and the network element set comprises at least one communication network element; and
sending, in response to the request message, the communication efficiency data that is of the network element set and that is obtained according to the first calculation formula.

15. The method according to claim 14, wherein the communication efficiency data is related to a ratio between the first calculation factor and the second calculation factor.

16. The method according to claim 14 or 15, wherein when the cost data is energy consumption data, the communication efficiency data is energy efficiency data.

17. The method according to claim 14 or 15, wherein when the cost data is carbon emission data, the communication efficiency data is carbon efficiency data.

18. The method according to claim 17, wherein the carbon emission data is real-time data collected from the network element set, the carbon emission data is predicted data obtained based on historical carbon emission data associated with the network element set, or the carbon emission data is obtained based on energy consumption data.

19. The method according to claim 16 or 18, wherein the energy consumption data is real-time data collected from the network element set, or the energy consumption data is predicted data obtained based on historical energy consumption data associated with the network element set.

20. The method according to any one of claims 14 to 19, wherein the service measurement data is real-time data collected from the network element set, or the service measurement data is predicted data obtained based on historical service measurement data associated with the network element set.

21. The method according to any one of claims 14 to 20, wherein the request message further comprises an identity of the at least one communication network element in the network element set.

22. The method according to any one of claims 14 to 21, wherein the method further comprises:
parsing the first calculation formula; and
checking the first calculation formula.

23. The method according to claim 22, wherein the first calculation formula further comprises an operator, and the operator is for calculating the first calculation factor and the second calculation factor; and
the checking the first calculation formula comprises at least one of the following operations:
checking whether the first calculation factor and the second calculation factor comply with a standard definition; or
checking whether the operator complies with a standard definition.

24. The method according to any one of claims 14 to 23, wherein the request message further comprises an identity corresponding to the first calculation formula.

25. The method according to claim 24, wherein the method further comprises:
checking whether the identity is the same as an identity defined in a standard.

26. The method according to claim 24 or 25, wherein the identity further corresponds to a second calculation formula for calculating the communication efficiency data of the network element set, and the request message is used to request to replace the second calculation formula with the first calculation formula.

27. A data obtaining method, wherein the method comprises:
sending, by a network management service consumer entity, a request message to a network management service provider entity, wherein the request message comprises a first calculation formula for calculating communication efficiency data of a network element set, the first calculation formula comprises a first calculation factor and a second calculation factor, the first calculation factor indicates service measurement data associated with the network element set, the second calculation factor indicates cost data associated with the network element set, and the network element set comprises at least one communication network element; and
sending, by the network management service provider entity to the network management service consumer entity in response to the request message, the communication efficiency data that is of the network element set and that is obtained according to the first calculation formula.

28. A data obtaining apparatus, wherein the apparatus comprises a module configured to implement the method according to any one of claims 1 to 26.

29. A data obtaining apparatus, comprising a processor, a memory, and instructions that are stored in the memory and that are run on the processor, wherein when the instructions are run, the data obtaining apparatus is enabled to perform the method according to any one of claims 1 to 26.

30. A data obtaining system, comprising a network management service provider entity and a network management service consumer entity, wherein the network management service provider entity comprises a module configured to perform the method according to any one of claims 1 to 13, and the network management service consumer entity comprises a module configured to implement the method according to any one of claims 14 to 26.

31. A computer-readable storage medium, wherein the computer-readable storage medium comprises instructions; and when the instructions are run by a processor, the method according to any one of claims 1 to 27 is implemented.

32. A computer program product, wherein the computer program product comprises related program instructions; and when the related program instructions are executed, the method according to any one of claims 1 to 27 is implemented.
